# EUROPÄISCHE PATENTSCHRIFT

(11) **EP 2 764 298 B1**
(45) Veröffentlichungstag und Bekanntmachung des Hinweises auf die Patenterteilung: **28.02.2018**
(21) Anmeldenummer: 12810155.7
(22) Anmeldetag: 12.12.2012
(51) Int. Cl.: F01K 13/02, F02C 6/18, F24H 9/20, F01K 23/06, H02J 3/38

(54) **BLOCKHEIZKRAFTWERK UND VERFAHREN ZU DESSEN BETRIEB**
COGENERATION PLANT AND OPERATION METHOD THEREFOR
CENTRALE DE COGÉNÉRATION ET MÉTHODE D'OPÉRATION CORRESPONDANTE

(30) Priorität: 23.01.2012 DE 102012200889
(43) Veröffentlichungstag der Anmeldung: 13.08.2014
(73) Patentinhaber: Siemens Aktiengesellschaft, 80333 München (DE)
(72) Erfinder: KAUTZ, Martin, 91056 Erlangen (DE); METZGER, Michael, 85570 Markt Schwaben (DE); SCHÄFER, Jochen, 90408 Nürnberg (DE); WOLFRUM, Philipp, 81539 München (DE)
(86) Internationale Anmeldenummer: PCT/EP2012/075147
(87) Internationale Veröffentlichungsnummer: WO 2013/110396

(56) Entgegenhaltungen:
- DE-A1- 10 339 564
- US-A1- 2009 107 129
- US-A1- 2009 320 503

## Beschreibung

Die Erfindung betrifft ein Verfahren zum Betreiben eines Blockheizkraftwerks nach dem Oberbegriff von Patentanspruch 1 sowie ein Blockheizkraftwerk nach dem Oberbegriff von Patentanspruch7.

Blockheizkraftwerke, die gleichzeitig elektrische Energie und Wärme zur Verfügung stellen, gewinnen zunehmend an Bedeutung für die Energieversorgung, weil sie sich erstens durch einen guten Wirkungsgrad und damit geringe Verbrauchs- und Emissionswerte auszeichnen und zweitens zum Ausgleich der fluktuierenden Einspeisung von erneuerbaren Energien dienen können.

Blockheizkraftwerke werden üblicherweise entweder wärmegeführt oder stromgeführt betrieben, je nach dem welcher Bedarf die Regelung des Blockheizkraftwerkes bestimmt. Es ist dabei bekannt, in Fällen, in denen ein höherer Elektrizitätsbedarf als Wärmebedarf besteht, die überschüssige erzeugte Wärme in entsprechenden Speichern zwischenzuspeichern, um so die Wärmenutzung zeitlich von der elektrischen Nutzung zu entkoppeln. Die typischen Speichergrößen erlauben dabei den Betrieb des Blockheizkraftwerks ohne thermische Last jedoch lediglich über wenige Stunden. Liegt bei vollem Speicher noch immer keine thermische Last an, so muss ein solches Blockheizkraftwerk gegebenenfalls trotz weiterhin bestehenden Strombedarfs wegen nicht ausreichender Kühlung seinen Betrieb einstellen. Gerade in Verbindung mit Stromnetzen mit starker photovoltaischer Erzeugung oder Windkraftnutzung kann es nun der Fall sein, dass besonders hohe elektrische Lasten von den Blockheizkraftwerken angefordert werden, ohne dass die gleichzeitig erzeugte Wärme abgenommen wird. Auf Grund der begrenzten Speichergröße kann es daher bereits nach wenigen Regenstunden oder nach wenigen Stunden Flaute zu einem Ausfall der Blockheizkraftwerke kommen, so dass zusätzlich Reserveleistung vorgehalten werden muss, die in diesem Fall eingesetzt werden kann. Dies ist jedoch weder betriebs- noch volkswirtschaftlich sinnvoll.

Der US 2009/0170129 A1 ist ein Kraft-Wärme-Kopplungssystem als bekannt zu entnehmen, mit einem Motor, einem von dem Motor antreibbaren Generator zum Erzeugen von elektrischer Energie und einem Wärmetauscher, mittels welchem kaltes Wasser erwärmbar ist, um dadurch unter Nutzung von Abwärme des Motors heißes Wasser zu erzeugen, wobei der Motor als erste Wärmequelle dient. Das Wärme-Kraft-Kopplungssystem umfasst ferner einen Tank zum Speichern des heißen Wassers. Darüber hinaus ist ein Lufterhitzer vorgesehen, mittels welchem Umgebungsluft erwärmbar ist. Zum Erwärmen der Umgebungsluft kann heißes Wasser aus dem Tank genutzt werden.

Es ist ein erster Kühlkreislauf vorgesehen, welcher sich zwischen dem Motor und dem Wärmetauscher erstreckt und von Kühlwasser durchströmbar ist. Ferner ist ein zweiter Kühlkreislauf vorgesehen, welcher sich zwischen dem Tank und dem Lufterhitzer erstreckt und von dem heißen Wasser durchströmbar ist. Das Kraft-Wärme-Kopplungssystem umfasst auch eine erste Kühleinrichtung und/oder eine zweite Kühleinrichtung, wobei das Kühlwasser mittels der ersten Kühleinrichtung gekühlt wird, wenn die Temperatur des heißen Wassers im Tank einen ersten vorgegebenen Wert überschreitet. Mittels der zweiten Kühleinrichtung wird das heiße Wasser gekühlt, wenn die Temperatur der heißen Luft in dem Lufterhitzer einen zweiten vorgegebenen Schwellenwert überschreitet.

Der vorliegenden Erfindung liegt somit die Aufgabe zu Grunde, ein Verfahren zum Betreiben eines Blockheizkraftwerks nach dem Oberbegriff von Patentanspruch 1 sowie ein Blockheizkraftwerk nach dem Oberbegriff von Patentanspruch 7 bereitzustellen, welche einen besonders flexiblen Betrieb von Blockheizkraftwerken auch bei geringer Nachfrage nach der erzeugten Wärmeenergie ermöglichen.

Diese Aufgabe wird durch ein Verfahren mit den Merkmalen des Patentanspruchs 1 sowie durch ein Blockheizkraftwerk mit den Merkmalen des Patentanspruchs 7 gelöst.

Bei einem solchen Verfahren zum Betreiben eines Blockheizkraftwerks zum Bereitstellen elektrischer und thermischer Energie für zumindest einen Verbraucher ist erfindungsgemäß vorgesehen, dass bei Überschreiten eines Schwellenwertes für eine Differenz zwischen einer bereitgestellten und einer abgerufenen Wärmeleistung die abgerufene Wärmeleistung erhöht wird.

Mit anderen Worten wird im Rahmen des erfindungsgemäßen Verfahrens für den Fall, dass der Elektrizitätsbedarf den aktuellen Wärmebedarf deutlich übersteigt, ein zusätzlicher, artifizieller Wärmebedarf geschaffen. Hierdurch können gegebenenfalls verwendete Wärmespeicher entlastet werden, so dass die abgerufene elektrische Energie zuverlässig auch für längere Zeiträume bereitgestellt werden kann, ohne dass die Wärmespeicherkapazität des Blockheizkraftwerks ausgelastet wird.

Auch bei hohem Elektrizitätsbedarf bei gleichzeitig geringer abgerufener Wärmeleistung kann die Elektrizität somit zuverlässig bereitgestellt werden, ohne dass zusätzliche Reservekapazitäten aktiviert werden müssen.

Das Verfahren erlaubt somit einen besonders ökonomischen Kraftwerksbetrieb, insbesondere in einem elektrischen Netz mit einer hohen Anzahl von stochastisch fluktuierenden Erzeugern.

Zur Erhöhung der abgerufenen Wärmeleistung ist es vorgesehen, einen Anteil der bereitgestellten Wärmeleistung einfach zu dissipieren, also in die Umwelt abzugeben. Hierzu erfolgt die Dissipation mittels eines einerseits mit dem Blockheizkraftwerk und andererseits an das Erdreich und/oder an ein stehendes oder fließendes Gewässer gekoppelten Wärmetauschers. Hierzu kann ferner beispielsweise ein an die Umgebungsluft und/oder an ein Wasserreservoir gekoppelter Wärmetauscher vorgesehen werden. Die dissipierte Energie geht dabei verloren, wird also nicht wie bei einem Wärmespeicher zurück gewonnen. Spezifische Implementierungen hiervon sind beispielsweise eine trockene oder nasse Rückkühlung, die Wärmeabgabe an stehende oder fließende Gewässer oder an einen geöffneten Kühlwasserkreis, wobei das erhitzte Kühlwasser verworfen wird.

Es ist weiterhin möglich, die abgerufene Wärmemenge durch Erhöhen des Wärmeverbrauchs des wenigstens einen Verbrauchers zu erhöhen. Hierzu kann beispielsweise eine Heizvorgabetemperatur für einen Raum, ein Schwimmbecken oder dergleichen erhöht werden, oder auch eine Nachtabsenkung eines Heizungssystems beendet werden. Die Erhöhung des Wärmeverbrauchs erfolgt hier also über ein Energiemanagementsystem, wobei die Erhöhung zweckmäßigerweise so gewählt wird, dass trotz der stärkeren Erwärmung der Räume, des Schwimmbeckens oder dergleichen eine Komfortschwelle für die Benutzer nicht überschritten wird.

Ferner kann zum Erhöhen des Wärmeverbrauchs ein weiterer Verbraucher aktiviert werden. Beispielsweise können hierfür Prozesse mit hohem Bedarf an thermischer Energie, beispielsweise Aufheizvorgänge, Reinigungsvorgänge oder dergleichen zeitlich vorgezogen werden, oder auch an sich nicht unmittelbar benötigte Räume zusätzlich geheizt werden, um so die überschüssige Wärme abzuführen.

Die Erfindung betrifft ferner ein Blockheizkraftwerk zum Bereitstellen elektrischer und thermischer Energie für zumindest einen Verbraucher, welches einen ersten Wärmetauscher, mittels welchem Wärme von einer Wärmequelle des Blockheizkraftwerks an ein Wärmeleitungsnetz übertragbar ist, umfasst. Erfindungsgemäß ist ferner vorgesehen, dass wenigstens ein weiterer Wärmetauscher mit dem Blockheizkraftwerk thermisch gekoppelt ist, mittels welchem Wärme beim Überschreiten eines Schwellenwerts für eine Differenz zwischen einer bereitgestellten und einer abgerufenen Wärmeleistung an die Wärmeumgebung abgebbar ist. Hierzu ist der einerseits mit dem Blockheizkraftwerk thermisch gekoppelte Wärmetauscher andererseits an das Erdreich und/oder an ein stehendes oder fließendes Gewässer gekoppelt.

Wie bereits anhand des erfindungsgemäßen Verfahrens geschildert, kann bei hohem elektrischen Energiebedarf und gleichzeitig geringem Wärmeenergiebedarf auf diese Art überschüssige erzeugte Wärme an die Umgebung dissipiert werden, so dass die elektrische Energieerzeugung fortgesetzt werden kann, ohne dass das Blockheizkraftwerk auf Grund der zu geringen Wärmeabfuhr überhitzt. Es ist hierfür, wie bereits geschildert, zweckmäßig, den weiteren Wärmetauscher mit der Umgebungsluft und/oder einem Wasserreservoir zu koppeln, um eine zuverlässige Abfuhr auch großer Wärmemengen zu ermöglichen.

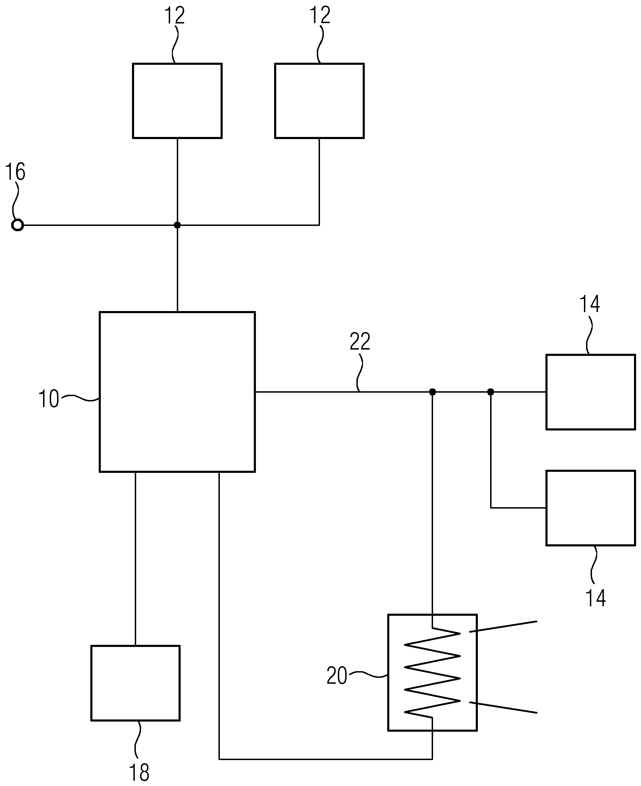

Im Folgenden werden die Erfindung und ihre Ausführungsformen anhand der Zeichnung näher erläutert. Die einzige FIG zeigt hierbei eine schematische Darstellung eines Ausführungsbeispiels eines erfindungsgemäßen Blockheizkraftwerks.

Ein Blockheizkraftwerk 10 stellt gleichzeitig elektrische Energie für elektrische Verbraucher 12 und thermische Energie für thermische Verbraucher 14 zur Verfügung und weist daher einen besonders hohen Wirkungsgrad auf. Aus der Tatsache, dass die elektrische und thermische Leistung des Blockheizkraftwerks 10 nicht unabhängig voneinander einstellbar sind, können sich jedoch auch Probleme ergeben. Wird beispielsweise von den elektrischen Verbrauchern 12 oder über ein gekoppeltes Stromnetz 16 eine hohe elektrische Leistung vom Blockheizkraftwerk 10 abgefragt, während die thermischen Verbraucher 14 kein oder nur geringe Leistungsanforderungen stellen, so kann es zu Problemen bei der Abfuhr der vom Blockheizkraftwerk 10 erzeugten Wärmemenge kommen.

Ein Teil der so erzeugten überschüssigen Wärme kann in Speichern 18 zwischengespeichert werden, sind diese jedoch überlastet, so muss das Blockheizkraftwerk 10 abgeschaltet werden, um eine Überhitzung zu vermeiden. Insbesondere wenn das Blockheizkraftwerk 10 in ein Stromnetz 16 mit einer hohen Anzahl von stochastischen Erzeugern, wie beispielsweise Solarenergie oder Windkraftanlagen integriert ist, wird es jedoch zur Lastbalancierung im Stromnetz 16 dringend benötigt. Im Falle eines Blockheizkraftwerks 10 müssten dann zusätzliche Reservekapazitäten hochgefahren werden, was ökonomisch nicht sinnvoll ist.

Um dies zu vermeiden, ist ein Wärmetauscher 20 mit dem Wärmeleitungsnetz 22 des Blockheizkraftwerks 10 gekoppelt. Übersteigt der elektrische Bedarf deutlich den Wärmebedarf, so kann überschüssige erzeugte Wärme über den Wärmetauscher 20 dissipiert werden. Der Wärmetauscher 20 kann dabei beispielsweise mit der Umgebungsluft, mit stehenden oder fließenden Gewässern sowie mit dem Erdreich gekoppelt werden. Auch ein Öffnen des Kühlwasserkreislaufs des Blockheizkraftwerks 10, so dass kaltes Frischwasser erhitzt und anschließend verworfen wird, kann zur Abfuhr überschüssiger Wärme beitragen.

Eine weitere Steuerung der abgefragten Wärmemenge ist durch die Kontrolle der thermischen Verbraucher 14 möglich. Auch hier kann im Fall einer die Wärmenachfrage deutlich übersteigenden Elektrizitätsnachfrage eine zusätzliche Kühlung des Blockheizkraftwerks 10 erzielt werden. Hierzu kann beispielsweise ein Gebäudemanagementsystem die Raumtemperatur von mittels der thermischen Verbraucher 14 erhitzten Räumen leicht erhöhen, um eine zusätzliche Wärmeabfuhr zu gewährleisten. Auch eventuell beheizte Swimmingpools oder dergleichen können zusätzlich erwärmt werden um zur Wärmeabfuhr beizutragen.

Wird die überschüssige Wärme nachts erzeugt, kann ein Nachtabsenkungsprogramm der Raumheizung beendet werden, so dass die Räume wieder stärker beheizt werden und auch so zusätzliche Wärme abgeführt wird. Auch außerhalb von Wohnanlagen, beispielsweise in Gewerbebetrieben ist ein derartiges Energiemanagement möglich. Beispielsweise können Prozesse mit hohem Bedarf an thermischer Energie, wie Aufheizvorgänge, Reinigungsvorgänge oder dergleichen vorgezogen werden, so dass die überschüssig erzeugte Wärmemenge abgeführt wird.

Insgesamt kann so vermieden werden, dass das Blockheizkraftwerk 10 auf Grund von Überhitzung stillgelegt werden muss, was das Vorhalten von zusätzlichen Reservekapazitäten im Stromnetz 16 vermeidet und damit einen ökonomischen Betrieb von gemischten, kleinräumigen und flexiblen Stromnetzen mit einer hohen Anzahl von stochastisch arbeitenden Erzeugern ermöglicht.

## Patentansprüche

1. Verfahren zum Betreiben eines Blockheizkraftwerks (10) zum Bereitstellen elektrischer und thermischer Energie für zumindest einen Verbraucher (12, 14),
**dadurch gekennzeichnet, dass**
bei Überschreiten eines Schwellenwertes für eine Differenz zwischen einer bereitgestellten und einer abgerufenen Wärmeleistung die abgerufene Wärmeleistung durch Dissipation eines Anteils der bereitgestellten Wärmeleistung erhöht wird, wobei die Dissipation mittels eines einerseits mit dem Blockheizkraftwerk (10) und andererseits an das Erdreich und/oder an ein stehendes oder fließendes Gewässer gekoppelten Wärmetauschers (20) erfolgt.

2. Verfahren nach Anspruch 1,
**dadurch gekennzeichnet, dass** eine zusätzliche Dissipation mittels des an die Umgebungsluft und/oder an ein Wasserreservoir gekoppelten Wärmetauschers (20) erfolgt.

3. Verfahren nach einem der Ansprüche 1 oder 2, **dadurch gekennzeichnet, dass** die abgerufene Wärmemenge durch Erhöhen des Wärmeverbrauchs des wenigstens einen Verbrauchers (14) erhöht wird.

4. Verfahren nach Anspruch 3, **dadurch gekennzeichnet, dass** zum Erhöhen des Wärmeverbrauchs eine Heizvorgabetemperatur für einen Raum, ein Schwimmbecken oder dgl. erhöht wird.

5. Verfahren nach Anspruch 3 oder 4, **dadurch gekennzeichnet, dass** zum Erhöhen des Wärmeverbrauchs eine Nachtabsenkung eines Heizungssystems beendet wird.

6. Verfahren nach einem der Ansprüche 3 bis 5, **dadurch gekennzeichnet, dass** zum Erhöhen des Wärmeverbrauchs ein weiterer Verbraucher (14) aktiviert wird.

7. Blockheizkraftwerk (10) zum Bereitstellen elektrischer und thermischer Energie für zumindest einen Verbraucher (12, 14), mit einem ersten Wärmetauscher, mittels welchem Wärme von einer Wärmequelle des Blockheizkraftwerks an ein Wärmeleitungsnetz (22) übertragbar ist,
**dadurch gekennzeichnet, dass**
wenigstens ein weiterer einerseits mit dem Blockheizkraftwerk (10) und andererseits an das Erdreich und/oder an ein stehendes oder fließendes Gewässer gekoppelter Wärmetauscher (20) vorgesehen ist, mittels welchem Wärme bei Überschreiten eines Schwellenwertes für eine Differenz zwischen einer bereitgestellten und einer abgerufenen Wärmeleistung an die Umgebung abgebbar ist.

8. Blockheizkraftwerk (10) nach Anspruch 7, **dadurch gekennzeichnet, dass** der weitere Wärmetauscher (20) zusätzlich mit der Umgebungsluft und/oder einem Wasserreservoir gekoppelt ist.

## Claims

1. Method for operating a combined heat and power plant (10) for providing electrical and thermal energy for at least one consumer unit (12, 14), **characterized in that** the heat output requested is increased by dissipating a proportion of the heat output provided when a threshold value for a difference between provided and requested heat output is exceeded, wherein the dissipation is effected by means of a heat exchanger (20) which is coupled on the one hand to the combined heat and power plant (10) and on the other hand to the soil and/or to stationary or running water.

2. Method according to Claim 1, **characterized in that** an additional dissipation is effected by means of the heat exchanger (20) which is coupled to the surrounding air and/or to a water reservoir.

3. Method according to one of Claims 1 or 2, **characterized in that** the requested quantity of heat is increased by increasing the heat consumption of the at least one consumer unit (14).

4. Method according to Claim 3, **characterized in that** a set heating temperature for a room, a swimming pool or the like is increased in order to increase the heat consumption.

5. Method according to Claim 3 or 4, **characterized in that** lowering of the nighttime temperature of a heating system is suspended in order to increase the heat consumption.

6. Method according to one of Claims 3 to 5, **characterized in that** a further consumer unit (14) is activated in order to increase the heat consumption.

7. Combined heat and power plant (10) for providing electrical and thermal energy for at least one consumer unit (12, 14) which comprises a first heat exchanger by means of which heat can be transferred from a heat source of the combined heat and power plant to a heat distribution network (22), **characterized in that** at least one further heat exchanger (20), which is coupled on the one hand to the combined heat and power plant (10) and on the other hand to the soil and/or to stationary or running water, is provided, by means of which heat can be discharged to the environment when a threshold for a difference between a provided and a requested heat output is exceeded.

8. Combined heat and power plant (10) according to Claim 7, **characterized in that** the further heat exchanger (20) is additionally coupled to the surrounding air and/or to a water reservoir.

## Revendications

1. Procédé pour faire fonctionner une centrale (10) de cogénération pour mettre de l'énergie électrique et thermique à disposition d'au moins un utilisateur (12, 14),
**caractérisé en ce que**,
si une valeur de seuil d'une différence entre une puissance calorifique mise à disposition et une puissance calorifique appelée est dépassée, on augmente la puissance calorifique appelée en dissipant une partie de la puissance calorifique mise à disposition, la dissipation s'effectuant au moyen d'un échangeur de chaleur (20), couplé d'une part à la centrale (10) de cogénération, et d'autre part au terrain et/ou à des eaux stagnantes ou courantes.

2. Procédé suivant la revendication 1,
**caractérisé en ce que**
l'on effectue une dissipation supplémentaire au moyen de l'échangeur de chaleur (20), couplé à l'air ambiant et/ou à un réservoir d'eau.

3. Procédé suivant l'une des revendications 1 ou 2,
**caractérisé en ce que** l'on augmente la quantité de chaleur appelée en augmentant la consommation de chaleur du au moins un utilisateur (14).

4. Procédé suivant la revendication 3, **caractérisé en ce que**, pour augmenter la consommation de chaleur, on augmente une température de prescription de chauffage d'une salle, d'une piscine ou analogue.

5. Procédé suivant la revendication 3 ou 4, **caractérisé en ce que**, pour augmenter la consommation de chaleur, on met fin à une diminution d'un chauffage pendant la nuit.

6. Procédé suivant l'une des revendications 3 à 5,
**caractérisé en ce que**, pour augmenter la consommation de chaleur, on active un autre utilisateur (14).

7. Centrale (10) de cogénération pour mettre de l'énergie électrique et thermique à disposition d'au moins un consommateur (12, 14), comprenant un premier échangeur de chaleur au moyen duquel de la chaleur peut être transmise d'une source de chaleur de la centrale de cogénération à un réseau (22) de conduction de chaleur,
**caractérisée en ce qu'**
il est prévu au moins un autre échangeur de chaleur (20), couplé d'une part à la centrale (10) de cogénération et d'autre part au terrain et/ou à des eaux stagnantes ou courantes, au moyen duquel de la chaleur peut, si une valeur de seuil d'une différence entre une puissance calorifique mise à disposition et une puissance calorifique appelée est dépassée, être cédée à l'atmosphère.

8. Centrale (10) de cogénération suivant la revendication 7, **caractérisée en ce que** l'autre échangeur de chaleur (20) est couplé supplémentairement à l'air ambiant et/ou à un réservoir d'eau.
